# EUROPÄISCHE PATENTANMELDUNG

(11) **EP 0 864 765 A2**
(43) Veröffentlichungstag der Anmeldung: **16.09.1998**
(21) Anmeldenummer: 98101502.7
(22) Anmeldetag: 29.01.1998
(51) Int. Cl.: F16B 12/42

(54) **Verbindungseinrichtung für Möbelstücke eines Möbelsystems**

(30) Priorität: 11.03.1997 DE 29704372 U
(71) Anmelder: VARIO BÜROEINRICHTUNGEN GmbH & Co. KG, D-65779 Kelkheim (DE)
(72) Erfinder: Dürr, Markus, 72141 Walddorf-Häsloch (DE)
(74) Vertreter: KEIL & SCHAAFHAUSEN Patentanwälte

(57) **Zusammenfassung**

Die Erfindung bezieht sich auf eine Einrichtung zum drehbaren Anbringen eines Möbelstücks, insbesondere zum drehbaren Miteinanderverbinden zweier Möbelstücke (1, 1') eines Möbelsystems, wie Möbelkorpusse, Abschirmungen und dgl., und ist gekennzeichnet durch eine Montagestange (2) mit wenigstens einem kreiszylindrischen Außenprofil (P) und jeweils zwei zusammenwirkenden Montageschellen (3, 3'), welche jeweils eine Befestigungslasche (4, 4'), mit welchen die beiden zusammenwirkenden Montageschellen (3, 3') an dem einen der Möbelstücke (1, 1') anbringbar sind, und jeweils einen Schellenabschnitt (5, 5') aufweisen, mit welchen die beiden zusammenwirkenden Montageschellen (3, 3') das Außenprofil P gegenläufig zwingenartig um je mehr als 90° aber weniger als 180° umgreifen.

## Beschreibung

Die Erfindung betrifft eine Einrichtung zum drehbaren Anbringen eines Möbelstücks, insbesondere zum drehbaren Miteinanderverbinden zweier Möbelstücke eines Möbelsystems, wie Möbelkorpusse, Abschirmungen und dergleichen.

Aufgabe der Erfindung ist es, eine solche Einrichtung funktionsgerecht bei einfacher Konstruktion und leichter Montierbarkeit auszubilden.

Diese Aufgabe wird erfindungsgemäß z.B. gelöst durch eine Montagestange mit wenigstens einem kreiszylindrischen Außenprofil und jeweils zwei zusammenwirkenden Montageschellen, welche jeweils eine Befestigungslasche, mit welchen die beiden zusammenwirkenden Montageschellen an dem einen der Möbelstücke anbringbar sind, und jeweils einen Schellenabschnitt aufweisen, mit welchem die beiden zusammenwirkenden Montageschellen das Außeprofil gegenläufig zwingenartig um je mehr als 90° oder weniger als 180° umgreifen.

Die erfindungsgemäße Verbindungseinrichtung besteht ersichtlich aus wenigen leicht montierbaren Teilen und sie gewährt eine sichere Drehbarkeit der betreffenden Möbelstücke um die in der Regel vertikale Montagestange. Es versteht sich, daß die Schellenabschnitte teilkreisringförmig ausgebildet sind, mit einem an das kreiszylindrische Außenprofil angepaßten Krümmungsradius. Die angegebene Winkelerstreckung der Schellenabschnitte gewährleisten dabei, daß diese nacheinander von der Seite her an die Montagestange herangeführt bzw. herangeschwenkt werden können und dann diese in ihrer endgültig montierten Stellung zwingenartig umschließen, so daß zwar noch eine Drehbewegung des betreffenden Möbelstücks um die dem Außenprofil der Montagestange zugeordneten Achse erfolgen kann, aber keine radiale Bewegung mehr relativ zu der Montagestange. Das zwingenartige Umgreifen der Montagestange gewährleistet auf diese Weise bei leichter Montage einen spielfreien Sitz.

Bei einer besonderen Ausgestaltung der Erfindung sind die Befestigungslasche und der Schellenabschnitt der beiden zusammenwirkenden Montageschellen jeweils über Gelenkabschnitte miteinander verbunden, welche auf einen gemeinsamen Gelenkbolzen aufnehmbar sind. Die Montageschellen bilden auf diese Weise jeweils zweiarmige Hebel, von welchen der Schellenabschnitt den einen und der Befestigungsabschnitt den anderen Hebel bilden.

Vorzugsweise sind die Befestigungslaschen der beiden zusammenwirkenden Montageschellen unterschiedlich weit abgewinkelt, so daß die Befestigungslaschen übereinanderliegend an dem einen der Möbelstücke von ein und derselben Seite her befestigbar sind und die Schellenabschnitte der beiden zusammenwirkenden Montageschellen die Montagestange auf gleicher Höhe an einander gegenüberliegenden Umfangsabschnitten umgreifen.

Bei einer weiteren vorteilhaften Weiterbildung des Erfindungsgedankens sind die Befestigungslaschen derart in ihrer Ebene abgekröpft, daß sie an den beiden benachbarten Möbelstücken auf gleicher Höhe befestigbar sind, obgleich die den beiden benachbarten Möbelstücken jeweils zugeordneten Schellenabschnitte paarweise in unterschiedlichen Höhen an der Montagestange angreifen.

Damit entweder verschiedene Möbelstücke in gleicher Höhe an ein und derselben Montagestange angelenkt sein können und/oder damit mehr als zwei Möbelstücke schwenkbar an der Montagestange positioniert werden können, ist gemäß einem weiteren Erfindungsmerkmal die Montagestange mit mehr als einem kreiszylindrischen Außenprofil ausgebildet.

Weitere Ziele, Merkmale, Vorteile und Anwendungsmöglichkeiten der Erfindung ergeben sich aus der nachfolgenden Beschreibung von Ausführungsbeispielen anhand der Zeichnung. Dabei bilden alle beschriebenen und/oder bildlich dargestellten Merkmale für sich oder beliebiger sinnvoller Kombination den Gegenstand der Erfindung auch unabhängig von ihrer Zusammenfassung in einzelnen Ansprüchen oder deren Rückbeziehung.

Es zeigen:
- Fig. 1: eine Schrägansicht zweier erfindungsgemäßer Montageschellen vor der Befestigung an einem Möbelstück und der Anlenkung an einer Montagestange,
- Fig. 2 und 3: in Draufsicht zwei erfindungsgemäße Montageschellen bei der Montage (Fig. 2) und nach der Montage (Fig. 3),
- Fig. 4: in Schrägansicht zwei in Montagestellung zusammengefügte Montageschellen zur Veranschaulichung der Relativschwenkung zueinander bei der Montage,
- Fig. 5 und 6: in Schrägansicht und in Seitenansicht eine andere Ausgestaltung der erfindungsgemäßen Montageschellen mit Abkröpfung in ihrer Montagestellung an einer Montagestange,
- Fig. 7 bis 11: jeweils in Draufsicht Montagestangen mit einem, zwei und drei kreiszylindrischen Außenprofilen, wobei nach den Fig. 7 bis 9 jeweils nur ein Möbelstück an der Montagestange angelenkt ist, während nach den Fig. 10 und 11 zwei bzw. drei MÖbelstücke in Form einer Abschirmung an der Montagestange angelenkt sind.

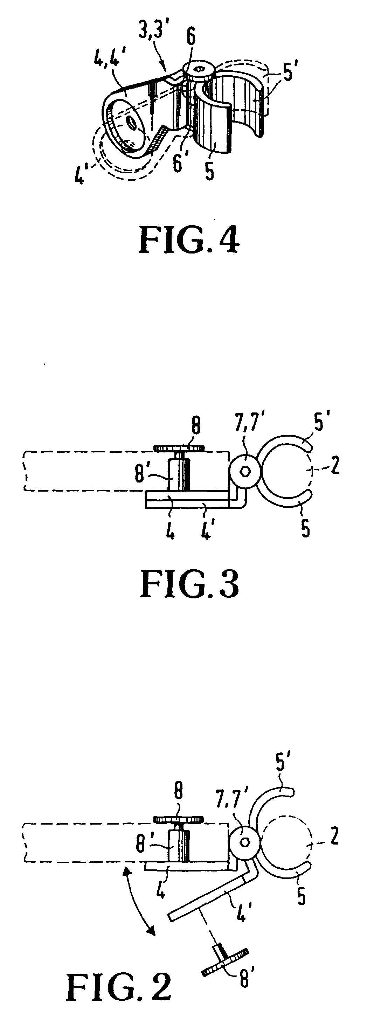

Die erfindungsgemäße Einrichtung zum drehbaren Anbringen eines Möbelstücks, insbesondere zum drehbaren Miteinanderverbinden zweier Möbelstücke 1, 1' eines Möbelsystems, wie Möbelkorpusse, Abschirmungen und dgl. weist gemäß den Darstellungen in den Fig. 2 bis 11 eine in der Regel stehende Montagestange 2 mit wenigstems einem kreiszylindrischen Außenprofil P und jeweils zwei zusammenwirkenden Montageschellen 3, 3' auf. Die Montageschellen 3, 3' haben jeweils eine flache Befestigungslasche 4, 4' für die Anbringung an ebenen Oberflächen der Möbelstücke 1, 1', bspw. mittels zweiteiliger Verschraubung 8, 8'. Die Form der Befestigungslaschen 4, 4' kann an die Form der Oberfläche des Möbelstücks 4, 4' angepaßt sein. Die Montageschellen 3, 3' haben ferner je einen Schellenabschnitt 5, 5', mit welchem die beiden zusammenwirkenden Montageschellen 3, 3' die Montagestange 2 im Bereich eines Außenprofils P gegenläufig zwingenartig um je mehr als 90°, aber weniger als 180° umgreifen können.

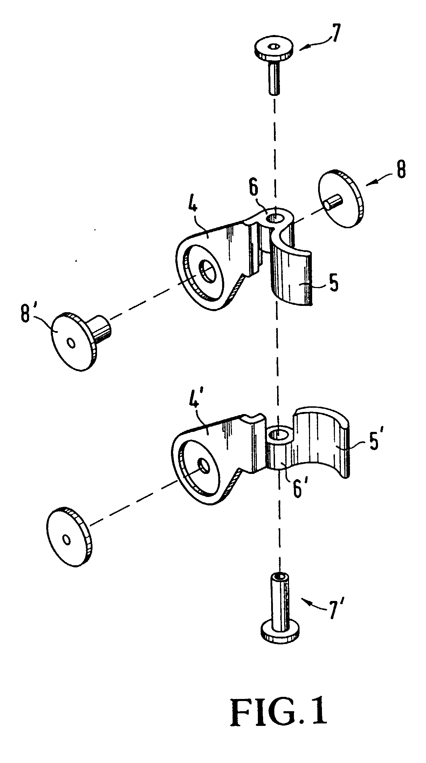

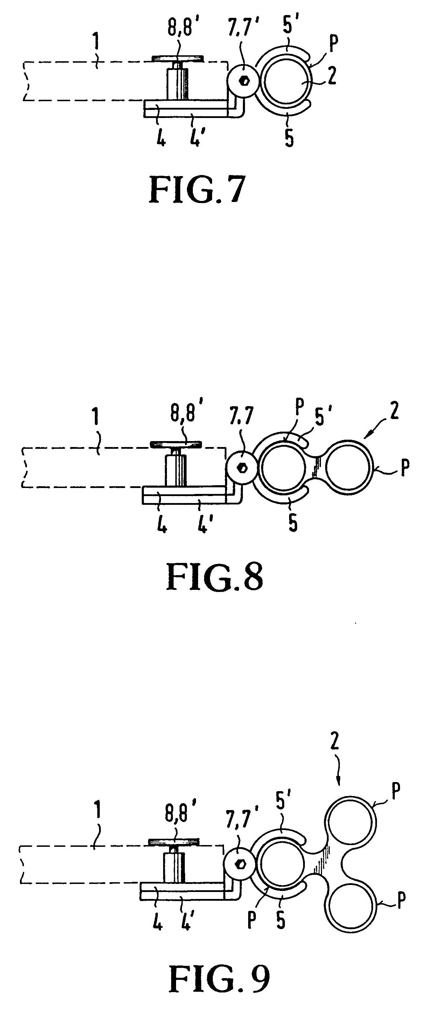

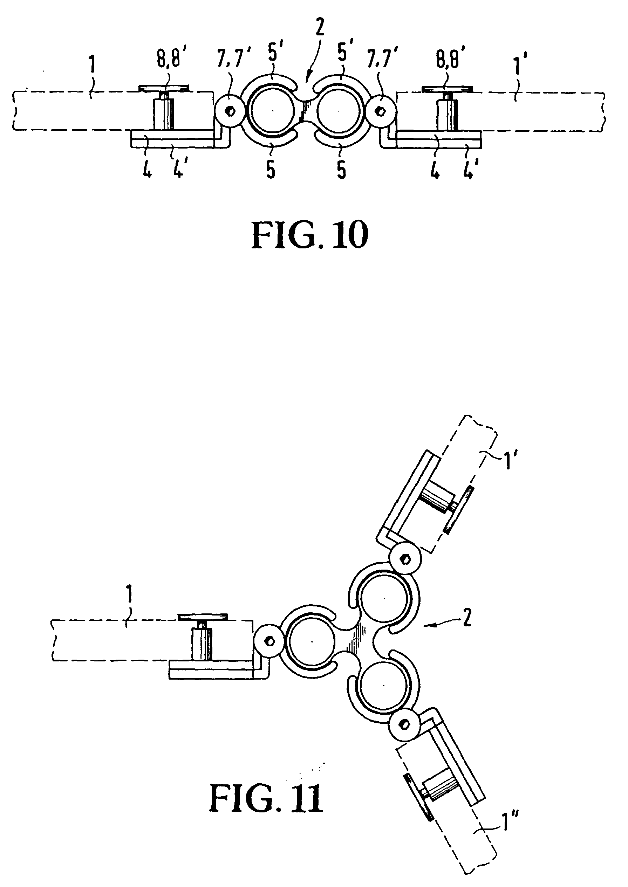

In den Fig. 2 bis 4 ist die Montageart der Verbindungseinrichtung demonstriert. Zunächst wird eine innenliegende Montageschelle 3 mit dem Möbelstück 1 im Bereich dessen einer Endkante mit Hilfe des Befestigungsabschnittes 4 montiert, so daß die Montageschelle 3 mit ihrem Schellenabschnitt 5 über das Ende des Möbelstücks 1 hinausragt und mit einem Gelenkabschnitt 6, welcher zwischen Befestigungslasche 4 und Schellenabschnitt 5 liegt, stirnseitig an dem Möbelstück 1 anliegt. Jetzt kann die Montagestange 2, welche gemäß Fig. 2 bis 7 ein kreiszylindrisches Außenprofil P, gemäß Fig. 8 und 10 zwei, und gemäß Fig. 9 und 11 drei miteinander verbundene kreiszylinderische Außenprofile P aufweist, in die Innenrundung des Schellenabschnitts 5 eingeführt werden. Alsdann wird die zweite Montageschelle 3' zunächst in die in Fig. 4 gestrichelt dargestellte Lage gebracht und dann in die in Fig. 1 mit ausgezogenen Linien dargestellte Position geschwenkt, in welcher die Montagestange 2 gegenläufig zwingenartig von den beiden Schellenabschnitten 5, 5' umgriffen wird. In dieser Lage werden die Befestigungsabschnitte 4, 4' übereinanderliegend mittels zweiteiliger Umschraubung 8, 8' mit dem Möbelstück 1 verbunden. Das zwingenartige Verschwenken der beiden Schellenabschnitte 5, 5' erfolgt dadurch, daß aufeinanderliegende Gelenkabschnitte 6, 6' auf einen gemeinsamen zweiteiligen Gelenkbolzen 7, 7' drehbar aufgenommen werden (vgl. Fig. 1).

Ein Vergleich der beiden Montageschellen 3, 3' in den Fig. 2 und 3 zeigt, daß die Abwinklung der Befestigungsabschnitte 4, 4' von dem jeweiligen Gelenkabschnitt 6, 6' in unterschiedlichem Abstand liegt, so daß die beiden Befestigungsabschnitte 4, 4' nach der Montage an dem Möbelstück 1 übereinander angeordnet sind. Die Fig. 2 und 3 veranschaulichen auch, daß die Schellenabschnitte 5, 5' in entgegengesetzten Richtungen relativ zu der Abwinklung der Befestigungslasche 4, 4' ausgebildet sind und jeweils eine Umfanglänge von etwa 120° haben.

An den Fig. 10 und 11 ist ersichtlich, daß an dem einen anderen bzw. an den beiden anderen rohrförmigen Längsabschnitten der Montagestange 2 mit kreiszylindrischem Außenprofilen P der Montagestange 2 noch zwei weitere Möbelstücke 1, 1', 1'' schwenkbar angebracht werden können. Ersichtlich kann die erfindungsgemäße Verbindungseinrichtung aber auch bloß dazu dienen, ein einziges Möbelstück 1 schwenkbar an einer Montagestange 2 anzuordnen, so daß dieses Möbelstück 2 auf einfache Weise in unterschiedliche Positionen gebracht werden kann.

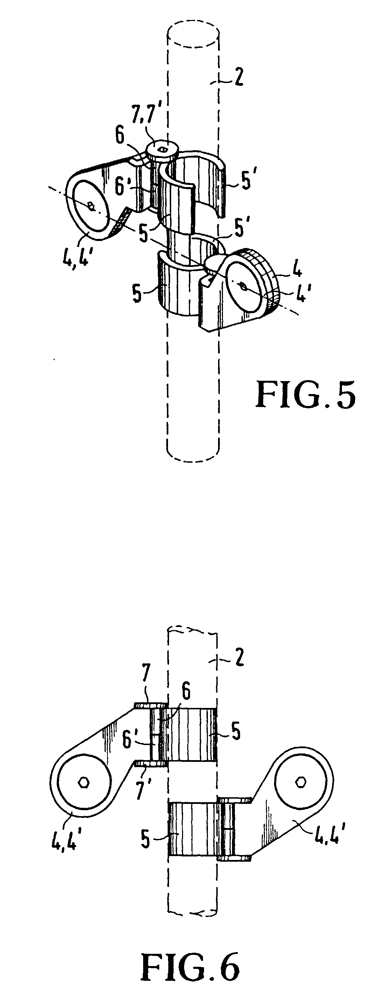

Fig. 5 und 6 veranschaulichen das erfindungsgemäße Prinzip der Verbindungseinrichtung am Beispiel der Anlenkung zweier Möbelstücke an ein und derselben einfach rohrförmigen Montagestange 2. Als Besonderheit ist zu erwähnen, daß die Befestigungsabschnitte 4, 4' in diesem Fall in ihrer Ebene seitlich nach oben bzw. nach unten derart abgekröpft sind, daß sie in gleicher Höhe an den einander zugeordneten Möbelstücken montierbar sind, während die Schellenabschnitte 5, 5' in unterschiedlicher Höhe an der Montagestange 2 angreifen können.

### Bezugszeichenliste

- 1, 1', 1'': Möbelstücke
- 2: Montagestange
- 3,3': Montageschellen
- 4,4': Befestigungslaschen
- 5,5': Schellenabschnitte
- 6,6': Gelenkabschnitte
- 7, 7': Gelenkbolzen
- 8, 8': Verschraubung
- P: Profile

## Patentansprüche

1. Einrichtung zum drehbaren Anbringen eines Möbelstücks, insbesondere zum drehbaren Miteinanderverbinden zweier Möbelstücke (1, 1') eines Möbelsystems, wie Möbelkorpusse, Abschirmungen und dgl., **gekennzeichnet durch** eine Montagestange (2) mit wenigstens einem kreiszylindrischen Außenprofil (P) und jeweils zwei zusammenwirkenden Montageschellen (3, 3'), welche jeweils eine Befestigungslasche (4, 4'), mit welchen die beiden zusammenwirkenden Montageschellen (3, 3') an dem einen der Möbelstücke (1, 1') anbringbar sind, und jeweils einen Schellenabschnitt (5, 5') aufweisen, mit welchen die beiden zusammenwirkenden Montageschellen (3, 3') das Außenprofil P gegenläufig zwingenartig um je mehr als 90° aber weniger als 180° umgreifen.

2. Einrichtung nach Anspruch 1, **dadurch gekennzeichnet**, daß die Befestigungslasche (4, 4') und der Schellenabschnitt (5, 5') der beiden zusammenwirkenden Montageschellen (3, 3') jeweils über Gelenkabschnitte (6, 6') miteinander verbunden sind, welche auf einem gemeinsamen Gelenkbolzen (7) aufnehmbar sind.

3. Einrichtung nach Anspruch 1 oder 2, **dadurch gekennzeichnet**, daß die Befestigungslaschen (4, 4') der beiden zusammenwirkenden Montageschellen (3, 3') unterschiedlich weit abgewinkelt sind, so daß die Befestigungslaschen (4, 4') übereinanderliegend an dem einen der Möbelstücke (1, 1') befestigbar sind und die Schellenabschnitte (5, 5') der beiden zusammenwirkenden Montageschellen (3, 3') die Montagestange (2, 2') auf gleicher Höhe umgreifen.

4. Einrichtung nach einem der Ansprüche 1 bis 3, **dadurch gekennzeichnet**, daß die Befestigungslaschen (4, 4') derart in ihrer Ebene abgekröpft sind, daß sie an den beiden benachbarten Möbelstücken (1, 1') auf gleicher Höhe befestigbar sind, obgleich die den beiden benachbarten Möbelstücken (1, 1') jeweils zugeordneten Schellenabschnitte (5, 5') paarweise in unterschiedlichen Höhen der Montagestange (2, 2') angreifen.

5. Einrichtung nach einem der Ansprüche 1 bis 4, **dadurch gekennzeichnet**, daß die Montagestange (2) mit mehr als einem kreiszylindrischen Außenprofil (P) ausgebildet ist.
